# EUROPÄISCHE PATENTSCHRIFT

(11) **EP 3 299 768 B1**
(45) Veröffentlichungstag und Bekanntmachung des Hinweises auf die Patenterteilung: **29.06.2022**
(21) Anmeldenummer: 16002063.2
(22) Anmeldetag: 23.09.2016
(51) Int. Cl.: G01C 23/00

(54) **MENSCH-MASCHINEN-INTERFACE FÜR DEN PILOTEN EINES FLUGGERÄTS**
MAN-MACHINE INTERFACE FOR THE PILOT OF AN AIRCRAFT
INTERFACE HOMME-MACHINE POUR PILOTES D'AVION

(43) Veröffentlichungstag der Anmeldung: 28.03.2018
(73) Patentinhaber: HENSOLDT Sensors GmbH, 82024 Taufkirchen (DE)
(72) Erfinder: Strobel, Michael, 88045 Friedrichshafen (DE)
(74) Vertreter: LifeTech IP Spies & Behrndt Patentanwälte PartG mbB

(56) Entgegenhaltungen:
- US-A1- 2004 160 341
- US-A1- 2016 171 758
- US-B1- 7 675 461
- BENNETT P J: "Enhanced navigation and displays from passive terrain referenced avionics", 19880523; 19880523 - 19880527, 23. Mai 1988 (1988-05-23), Seiten 209-216, XP010076893,

## Beschreibung

Die Erfindung betrifft ein Mensch-Maschinen-Interface für den Piloten eines Fluggeräts zur Erzeugung einer der Außensicht des Piloten konformen 3D-Symbolik.

Für Helikopter als auch Flugzeuge sind Mensch-Maschinen-Interfaces als sogenannte Enhanced Vision Systems, Synthetic Vision Systems, Combined Vision Systems oder Enhanced Flight Vision Systeme bekannt. Diese Systeme, im Folgenden synthetische Sicht-Systeme genannt, sollen den Piloten bei Nacht oder schlechten Sichtbedingungen, wie Nebel, Regen oder auch White- und Brownout, unterstützen, indem sie eine synthetische Sicht der Außenwelt entweder auf einem Head-Down-Display (HDD) oder Head-Up (HUD) oder Helmet Mounted Display (HMD) erzeugen. Die derzeitigen synthetischen Sicht-Systeme sind meist für die Landephase an einem Flughafen konzipiert, wobei mit unterschiedlichen Techniken versucht wird, dem Piloten die Startbahn-Befeuerung oder die Landebahn-Markierung besser sichtbar zu machen. Deshalb kommen unterschiedliche Sensoren (Radar, LIDAR etc.) sowie Datenbanksysteme (Elevationsdaten, Hindemisdaten etc.) zum Einsatz. Neben der Landung sollen die Systeme auch das Situationsbewusstsein ("Situational Awareness") beim Reiseflug steigern.

Bei den bekannten synthetischen Sicht-Systemen wird dem Piloten das umliegende Gelände als Überlagerung zu seiner natürlichen Außensicht dargestellt, was bei einem HUD / HMD meist mittels einem vollständigem Gitternetz als abstrakte Darstellung des Geländes realisiert wird. Die Darstellung dieser 3D-Symbolik im HUD/HMD erfolgt konform zu der momentanen Außensicht des Piloten, also aus der Perspektive des Piloten (im Folgenden als 3D-konforme Symbolik bezeichnet).

Dieser 3D-konformen Symbolik werden zusätzliche Informationen wie künstlicher Horizont, Höhe über Grund etc. überlagert (siehe z.B. DE 10 2007 014 015 A1). Letztere werden zusammenfassend als 2D-Flugsymbolik bezeichnet. Ähnliche bekannte Systeme sind in Bennett, P. J.: "Enhanced navigation and displays from passive terrain referenced avionics", in US 7,675,461 B1 oder in US 2016/0171758 A1 oder in US 2004/0160341 A1 offenbart, wobei hier Konturbilder und Gitternetze zur Darstellung genutzt werden.

Dies führt insgesamt zu einer zu hohen Anzahl und Dichte an Informationen auf dem Display, was sich insbesondere bei einem HUD oder HMD negativ auswirkt, da dem Piloten die Außensicht behindert bzw. erschwert wird. Hinzu kommt eine erhöhte Arbeitslast des Piloten, um alle Informationen zu sichten und ggf. auf Plausibilität zu überprüfen.

Es ist Aufgabe der Erfindung, ein Mensch-Maschinen-Interface für den Piloten eines Fluggeräts zu schaffen, die ihm situationsgerecht die benötigten Informationen zur Verfügung stellt und eine Informationsüberflutung vermeidet.

Diese Aufgabe wird mit dem Gegenstand des Anspruchs 1 gelöst. Vorteilhafte Ausführungen sind Gegenstand von Unteransprüchen.

Mit der erfinderischen Lösung wird sichergestellt, dass das Display (insbesondere ein HUD, ein HMD oder ein HDD) nicht überladen ist und nur die für die aktuelle Situation benötigten Informationen dargestellt werden. Die Arbeitsbelastung sinkt und das Situationsbewusstsein steigt. Kritische Mission können effizienter und sicherer durchgeführt werden.

Gemäß der Erfindung kann mittels der Außensicht-konformen 3D-Symbolik zur Darstellung des umliegenden Geländes sowohl die Darstellung eines Gitternetzes, welches das Gelände in abstrakter Weise moduliert sowie die Darstellung der Konturlinien dieses Geländes, also die Umrisse der einzelnen Höhenzüge des Geländes, erfolgen. Die Darstellung von Gitternetz und Konturlinien kann erfindungsgemäß abhängig vom Flugzustand des Fluggeräts (z.B. aktuelle Flugphase, Flughöhe, etc.) unabhängig voneinander aktiviert oder deaktiviert werden.

So sind bein Reiseflug sowohl Gitternetz als auch Konturlinien des Geländes aktiviert, wobei die Aktivierung des Gitternetzes zusätzlich noch von der Flughöhe abhängig gemacht werden kann. Beim Überschreiten einer Mindestflughöhe kann so auf die Darstellung des Gitternetzes verzichtet werden (da in dieser Situation von geringerem Nutzen für den Piloten), und sich der Pilot ausschließlich an den Konturlinien orientieren kann, was in der gegebenen Situation vollkommen ausreichend ist.

Bei Start und Landung können vorteilhaft zur Reduzierung der dargestellten Informationsmenge die Konturlinien deaktiviert werden, jedoch das die Umgebung modellierende Gitternetz weiterhin aktiviert sein.

Eine weitere erfindungsgemäße Maßnahme zur situationsgerechten Darstellung der Geländeinformationen besteht darin, das Gitternetz ausschließlich jenseits einer definierten Mindestentfernung des darzustellenden Geländes anzuzeigen. Der Pilot wird nämlich den vor ihm befindlichen Nahbereich - zumindest bei guten Sichtbedingungen - ausreichend mit seiner natürlichen Sicht überblicken, so dass eine virtuelle Darstellung durch Gitternetz nur für den Fernbereich zweckmäßig ist. Dabei wird erfindungsgemäß die Festlegung der Mindestentfernung von den Sichtbedingungen abhängig gemacht. Die Mindestentfernung kann mit verschlechterten Sichtbedingungen absinken.

Darüber hinaus kann eine weitere situationsgerechte Anpassung der Informationspräsentation erfolgen, in dem die Größe einer Zelle des Gitternetzes in Abhängigkeit vom Flugzustand des Fluggeräts variiert wird. Für die Skalierung der Zellgröße ist insbesondere die Flughöhe von Bedeutung. Es ist unmittelbar einsichtig, dass in großen Höhen die Darstellung des Geländes mit größeren Zellen erfolgen sollte als im Tiefflug, da andernfalls die Vielzahl der Zellen zu einer Überladung der Darstellung führen würde.

In einer weiteren vorteilhaften Ausführung kann die Intensität, mit der Gitternetz und/oder Konturlinien dargestellt werden, in Abhängigkeit von der Entfernung des darzustellenden Geländes variiert werden. Dadurch ist sichergestellt, dass die Aufmerksamkeit des Piloten zuvorderst auf die unmittelbare Umgebung vor dem Fluggerät gelenkt wird. Diese Abnahme der Intensität in der Darstellung kann kontinuierlich vorgesehen sein, so dass sich gleitender Übergang ergibt.

In einer weiteren vorteilhaften Variante können die Kreuzungspunkte des Gitternetzes gegenüber den übrigen Bestandteilen des Gitternetzes graphisch hervorgehoben werden (z.B. durch eine Variation der Strichstärke). Es erfolgt eine graphische Reduktion des dargestellten Gitters, ohne dass der Nutzen der Darstellung für den Piloten merklich eingeschränkte würde, da der dreidimensionale Eindruck von dem Gelände sich im Wesentlichen bereits aus dem Netz der Kreuzungspunkte ergibt.

Grundsätzlich kann die 3D-konforme Symbolik zur abstrakten Darstellung des Geländes und der Umgebung aus Datenbankdaten, Sensordaten oder eine Kombination von beidem erzeugt werden. Als on-bord Sensor zur Erzeugung von 3D-Daten eignet sich insbesondere ein Lasar-Radar (LIDAR) oder ein Mikrowellen-Radar. Gemäß einer vorteilhaften Ausführung der Erfindung kann die 3D-Symbolik Echtzeit-Daten eines an Bord des Fluggeräts befindlichen 3D-Sensors umfassen (Sensor-Live-Daten). Die vom Sensor momentan gemessenen 3D-Sensorpunkte des umliegenden Geländes werden direkt in die 3D-konforme Symbolik übernommen. Dies ist insbesondere für die Landephase hilfreich, da durch die Darstellung der Sensorpunkte ohne längere Bearbeitungszeit ein detailliertes Bild der Bodenbeschaffenheit visualisiert werden kann (Büsche, kleinere Steine, etc.)

Insbesondere für die Darstellung in einem Head-Down Display (HDD, also typischerweise einem Monitor) können die Echtzeit-Daten des 3D-Sensors mit einer Texturierung unterlegt werden, wobei die zugehörige Texturierung z.B. aus einer Geländedatenbank entnommen werden kann.

Gemäß der erfinderischen Lösung erfolgt eine abstrakte, vom Piloten intuitiv erfassbare und situationsgerechte Visualisierung von Geländeinformationen. Die Darstellung wird auf die je nach Flugzustand notwendige Information beschränkt und vermeidet eine Überforderung des Piloten.

Die Erfindung wird anhand von Figuren näher erläutert. Es zeigen:
Fig. 1 eine beispielhafte Übersicht zur Aktivierung bzw. Deaktivierung der Darstellung bestimmter Informationen der konformen 3D-Symbolik innerhalb definierter Flugphasen;
Fig. 2 zwei Darstellungen desselben Geländes mittels konformer 3D-Symbolik:
   a) mit Konturlinien und Gitternetz,
   b) ausschließlich mittels Konturlinien;
Fig. 3 zwei Darstellungen desselben Geländes mittels konformer 3D-Symbolik,
   a) Darstellung über den gesamten erfassbaren Bereich des darzustellenden Geländes,
   b) Darstellung des Geländes nur jenseits einer definierten Mindestentfernung;
Fig. 4 ein Beispiel für die Intensität, mit der die 3D-konforme Symbolik abhängig von der Entfernung des darzustellenden Geländes in einem Display dargestellt wird;
Fig. 5 der Ausschnitt eines Gitternetzes der 3D-konformen Symbolik;
Fig. 6 zwei Darstellungen desselben Geländes mittels konformer 3D-Symbolik,
   a) Darstellung des Gitternetzes mit einheitlicher Strickstärke,
   b) Darstellung des Gitternetzes mit graphisch betonten Kreuzungspunkten;
Fig. 7 zwei Darstellungen desselben Geländes mit unterschiedlichen Zellgrößen;
Fig. 8 die in einem Head-up Display dargestellten Informationen, wobei der 3D-konformen Symbolik weitere Informationen überlagert sind (2D Flugsymbolik); die 3D-konforme Symbolik umfasst aktuelle 3D-Messpunkte eines an Bord befindlichen 3D-Sensors.

Die folgenden Figuren erläutern die Erfindung anhand von Beispielen, die insbesondere für Helikopterpiloten relevant sind. Es ist aber offensichtlich, dass die Erfindung auch für andere Arten von Flugzeugen, insbesondere Starrflügler anwendbar ist.

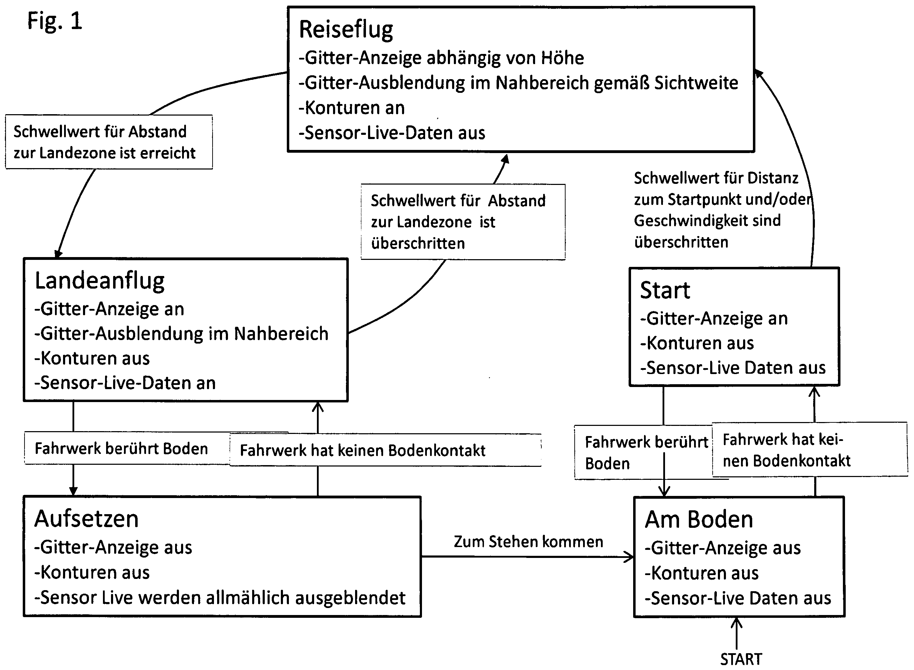

Fig. 1 eine beispielhafte Übersicht zur Aktivierung bzw. Deaktivierung in der Darstellung bestimmter Informationen der konformen 3D-Symbolik innerhalb einzelner Flugphasen. Sie deckt einen gesamten Flugzyklus des Fluggeräts ab.

Es ist darauf hinzuweisen, dass die im Folgenden beschriebene Aktivierung/Deaktivierung der einzelnen Informationen vollständig automatisch ablaufen kann. Dazu greift das erfindungsgemäße Mensch-Maschinen-Interface auf interne, im Fluggerät vorhandene Daten zurück (insbesondere Sensordaten, Daten des Navigationssystems, etc).

Der Ausgangszustand ist mit dem Status "Am Boden" bezeichnet. Hier ruht das Fluggerät auf dem Boden. Die Anzeigen von Gitternetz, Konturen und Sensor-Live-Daten sind noch nicht aktiviert.

Sobald das Fahrwerk keinen Bodenkontakt mehr hat (entsprechende Daten werden vom Weight-on-Wheels Sensor geliefert) erfolgt ein Umschalten der Displayanzeige (bevorzugt einem HUD oder HMD), wie im Kasten "Start" in Fig. 1 angegeben. Die Anzeige des Gitternetzes wird aktiviert, während die Anzeige von Konturlinien und Sensor-Live-Daten deaktiviert ist. Die Größe einer Gitterzelle wird so eingestellt, dass die Geländestrukturen klar ersichtlich sind, um z.B. kleinere Hindernisse und Bodenunebenheiten zu erkennen. Die Gitterkonstante kann z.B. 50 m betragen.

Alternativ, wenn eine spezielle virtuelle Start-Symbolik verwendet wird (siehe z.B. EP2527792 A1) kann auf die Anzeige des Gitternetzes in der Startphase verzichtet werden.

Sobald der Schwellwert für die Distanz vom Startpunkt und/oder für die Geschwindigkeit über Grund überschritten ist, das Fluggerät also in den Reiseflug übergeht, erfolgt ein erneutes Umschalten hinsichtlich der Darstellung der Displayinformationen. Nun wird die Darstellung der Konturlinien aktiviert.

Das Gitternetz bleibt weiterhin aktiviert, allerdings nur, solange die Flughöhe noch nicht eine vordefinierte Höhe erreicht hat. Wird diese Flughöhe erreicht, wird die Anzeige des Gitters deaktiviert. Sofern die Gitteranzeige aktiviert ist, wird die Gitterkonstante entsprechend der aktuellen Flughöhe angepasst, z.B.:
Niedrige Höhen: Gitterkonstante100m bis 200m.
Größere Höhen: Gitterkonstante größer 500m.

Abhängig von der aktuellen Sichtweite wird das Gitternetz nicht vollständig dargestellt, sondern vielmehr im Nahbereich ausgeblendet. Die Darstellung des Gitters beginnt also erst für das Gelände jenseits einer bestimmten Entfernung zum Fluggerät.

Die Sensor-Live-Daten sind weiterhin deaktiviert.

Nähert sich das Fluggerät der Landezone, in dem es einen vorgegebenen Schwellwert für den Abstand dorthin unterschreitet, erfolgt eine weitere Umschaltung der Displayanzeige speziell für die nun folgende Flugphase des Landeanflugs. Die Anzeige der Konturlinien wird nun deaktiviert.

Die Gitterkonstante des Gitternetzes wird so eingestellt, dass die Geländestruktur klar ersichtlich wird, um z.B. kleinere Hindernisse und Bodenunebenheiten zu erkennen. Die Gitterkonstante kann z.B. 50m betragen. Im Nahbereich wird das Gitternetz jedoch nicht dargestellt, zum Beispiel um eine zusätzliche Landesymbolik hervorzuheben und die Anzeige in diesem Bereich dann nicht zu überladen.

Während des Landeanflugs wird die Anzeige der Live-Sensor-Daten aktiviert. Diese geben dem Piloten in dieser naturgemäß kritischen Flugphase aktuelle und detaillierte Informationen über die Beschaffenheit der unmittelbaren Landezone.

Sobald die Weight-on-Wheels Sensoren melden, dass das Fahrwerk Bodenkontakt hat, das Fluggerät also aufgesetzt hat ("Touch-Down"), erfolgt ein weiteres Umschalten der Displayanzeige. Da in diesem Zustand des Fluggeräts durchaus noch horizontale Bewegungen möglich sind, wird die Darstellung der Live-Sensor-Daten zunächst aufrechterhalten und nur allmählich ausgeblendet. Die Darstellung des Gitternetzes und der Konturlinien wird deaktiviert. Eine vorhandene spezielle Landesymbolik wird weiterhin dargestellt.

Erste wenn das Fluggerät sicher zum Stehen gekommen ist, wird die Displayanzeige komplett deaktiviert, wie in Fig. 1 im Kasten "Am Boden" angegeben.

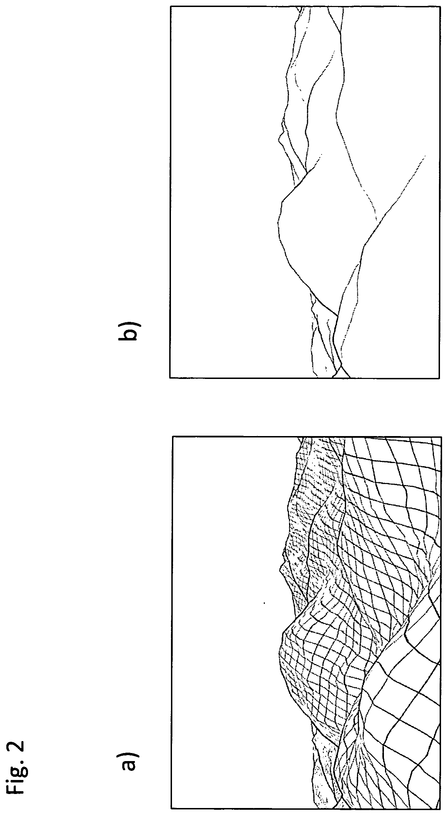

Zum Vergleich zeigt die Fig. 2 zwei Darstellungen desselben Geländes mittels konformer 3D-Symbolik. In der Fig. 2a ist das Gelände mittels Gitternetz und Konturlinien dargestellt, während in der Fig. 2b auf das Gitternetz vollständig verzichtet wird und das Geländes nur mittels Konturlinien dargestellt wird. Es wird deutlich, dass unter gewissen Umständen, z.B. bei größeren Flughöhen oder größerer Entfernung die Darstellung ausschließlich mittels Konturlinien bereits einen sehr anschaulichen räumlichen Eindruck ergibt und die gleichzeitige Darstellung mittels Gitternetz verzichtbar oder sogar kontraproduktiv ist, da sie eher zu einer Überladung des Displays führt.

Die Erzeugung der Konturlinien kann nach den an sich bekannten Verfahren aus den Tiefeninformationen eines 3D-Bildes erzeugt werden, z.B. durch Kantendetektion unter Anwendung eines Sobel-Operators.

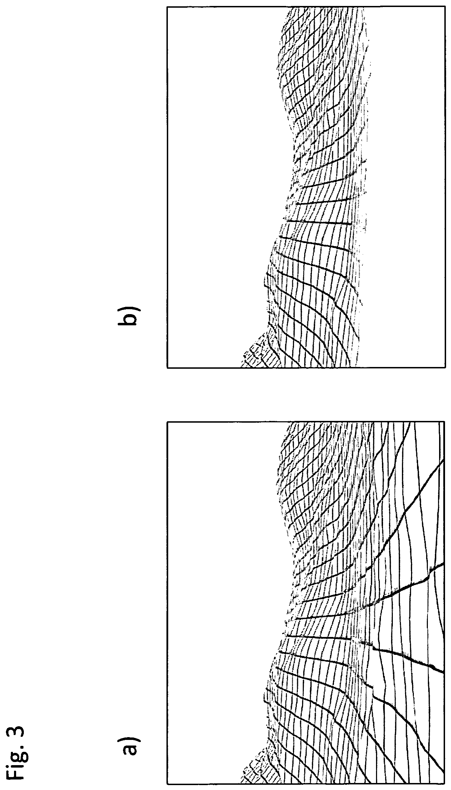

Die Fig. 3 zeigt zwei Darstellungen desselben Geländes in einem Display, z.B. einem HUD oder HMD mittels konformer 3D-Symbolik, wobei in Fig. 3a das Gitternetz sich über den gesamten Bereich des darzustellenden Geländes erstreckt, während in Fig.3b die Darstellung des Geländes erst ab einer definierten Mindestentfernung beginnt. Der Nahbereich wird also ausgespart, wobei die Mindestentfernung von den herrschenden Sichtverhältnissen abhängig gemacht wird. Für den Bereich, den der Pilot mit bloßem Auge noch gut erkennen kann, benötigt er keine Unterstützung durch die 3D-konforme Symbolik. Im Sinne einer Reduzierung der Darstellung nicht zwingend notwendiger Informationen wird dieser Nahbereich erfindungsgemäß deshalb von der Darstellung des Gitternetzes ausgespart.

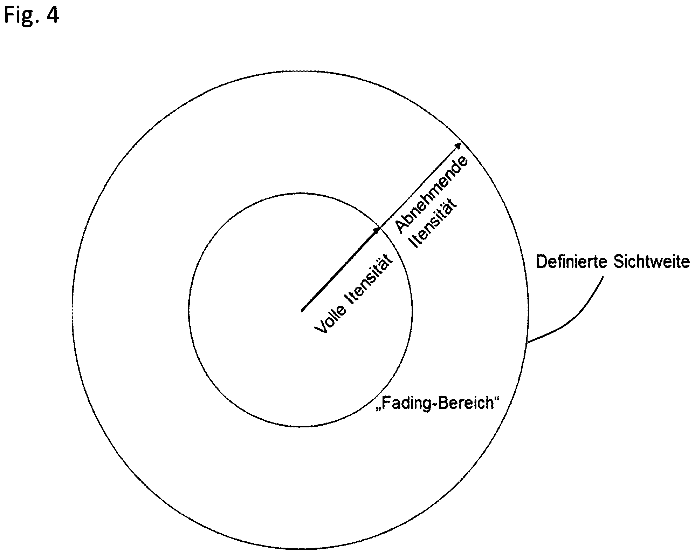

Fig. 4 ein Beispiel für die Wahl der Intensität, mit der die 3D-konforme Symbolik (Gitternetz und Konturlinien) abhängig von der Entfernung des darzustellenden Geländes in einem Display dargestellt wird. Zunächst wird die maximale Sichtweite definiert, innerhalb derer überhaupt eine Darstellung im Display erfolgen soll. Diese maximale Sichtweite entspricht dem Durchmesser des äußeren Kreises in Fig. 4, dessen Mittelpunkt vom Ort des Fluggeräts gebildet wird.

Der innere Kreis gibt den Schwellwert an, bis zu welchem die 3D-konforme Symbolik in voller Intensität gezeichnet werden. Danach beginnt der sogenannte Fading-Bereich, wo die Intensität kontinuierlich bis zum Erreichen der maximalen Sichtweite (äußerer Kreis) abnimmt. Dadurch entstehen in der Darstellung keine plötzlichen Sprünge (oder diese sind zumindest nicht auffällig) durch plötzlich auftretende Konturen, wenn das Fluggerät sich einem hügeligen Gelände nähert.

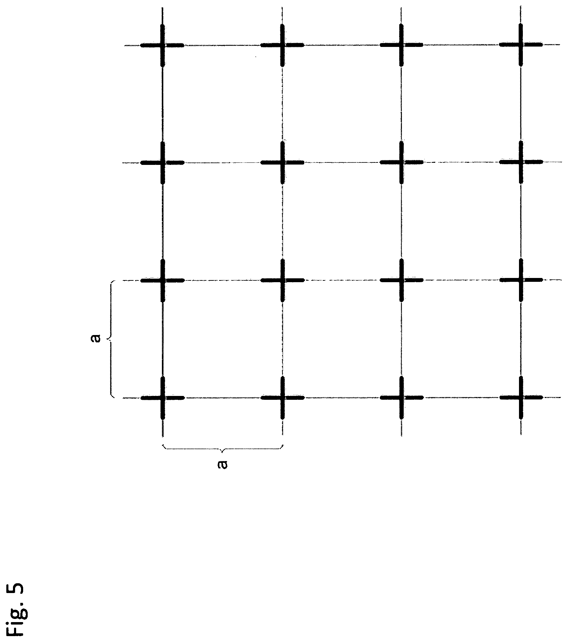

Fig. 5 zeigt den Ausschnitt eines Gitternetzes der 3D-konformen Symbolik, hier idealisierend als gleichförmiges Gitter wiedergegeben, was einem völlig ebenen Geländeausschnitt entspricht. Die Gitterkonstante ist mit dem Buchstaben a bezeichnet. Um auch bei der Darstellung des Gitternetzes die dargestellte Datenmenge möglichst zu reduzieren, wird das Gitter nicht durchgehend mit gleichstarken Linien gezeichnet. Vielmehr werden nur die Kreuzungspunkte markant hervorgehoben, in dem die Strichstärke dort erhöht wird, während die Strichstärke in den übrigen Abschnitten der Gitterlinien vergleichsweise gering gewählt wird. Diese Reduktion ist möglich, ohne dass sich für den Piloten der visuelle Eindruck des Geländes verschlechtern würde, da dieser Eindruck vornehmlich bereits durch das Netz der Kreuzungspunkte bestimmt ist.

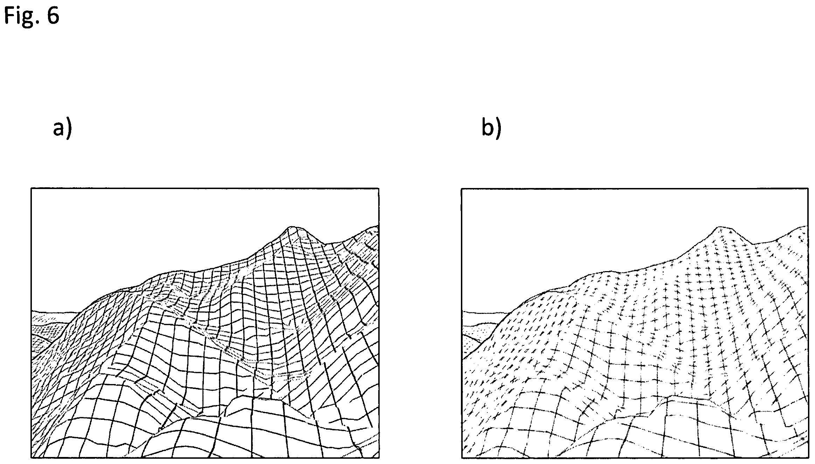

Dies wird deutlich, wenn man die zwei Darstellungen gemäß Fig. 6 miteinander vergleicht, die dasselbe Gelände zeigen, jedoch in Fig. 6a mittels einheitlicher Strickstärke des Gitternetzes, in Fig. 6b jedoch mit dem in Fig. 5 erläuterten Prinzip der betonten Kreuzungspunkte. Man erkennt deutlich, dass der räumliche Eindruck des modellierten Geländes sich durch die beschriebene Betonung der Kreuzungspunkte unter Reduktion der übrigen Bereiche des Gitters nicht verschlechtert, gleichzeitig der visuelle Eindruck in Fig. 6b aber deutlich schlanker und weniger überladen erscheint.

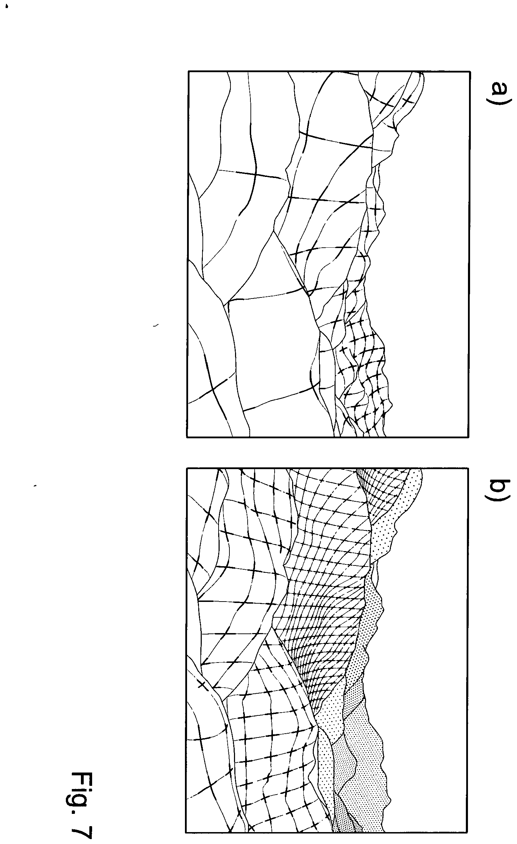

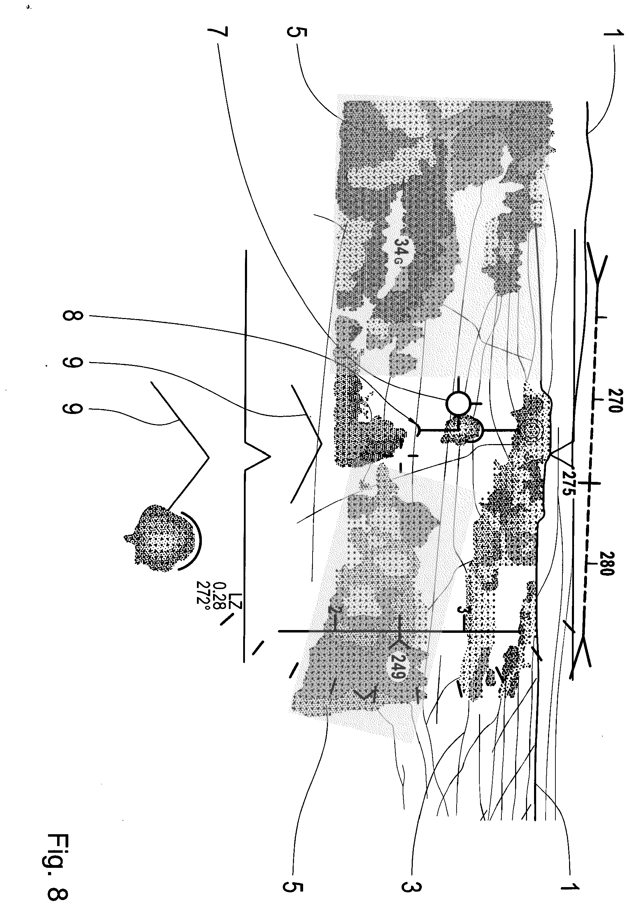

Zur weiteren Optimierung der visuellen Darstellung unter Beschränkung auf die notwendigen Darstellungselemente kann die Zellgröße des Gitternetzes (Gitterkonstante a in Fig. 5) bedarfs- und situationsgerecht eingestellt werden. In Fig. 7 a und ist dasselbe Gelände, aber mit unterschiedlicher Zellgröße dargestellt. In Fig. 7a entspricht eine Zelle im Vordergrund etwa 500m, während in Fig. 7b die entsprechende Zelle nur 100m entspricht. In diesen beiden Darstellungen der Fig. 7 ist der virtuellen 3D-Symbolik die reale Sicht des Piloten unterlegt, so dass man gut die Modellierung der realen Umgebung durch 3D-Symbolik erkennen kann. Insbesondere im Landeanflug kann die Darstellung der Sensor-Live Daten im HUD oder HMI dem Piloten zusätzliche Details zur aktuellen Beschaffenheit der Landezone einschließlich eventuell vorhandener Hindernisse liefern. Fig. 8 zeigt ein Beispiel für eine solche Darstellung, wobei hier der 3D-konformen Symbolik zur abstrakten Darstellung des Geländes weitere Informationen überlagert sind (2D Flugsymbolik). Insoweit repräsentiert die Fig. 8 ein realistisches Beispiel für die dem Piloten vom HUD oder HMI im Einsatzfall präsentierten Inhalte.

Hinsichtlich der 3D-konformen Symbolik erkennt man in Fig. 8 verschiedene Konturlinien 1 des Geländes sowie ein Gitternetz 3 zur weiteren Modellierung des Geländes. Wie man aus der Fig. 8 ebenfalls erkennt, wird das Gitternetz im Nahbereich des Fluggeräts nicht dargestellt. Die konform zur Außensicht des Piloten dargestellten Messpunkte 5 des 3D-Sensors geben dem Piloten weitere Aufschlüsse über die Beschaffenheit der Umgebung der Landezone. Man kann aus den vorhandenen 3D-Messpunkten auf einzelne Bäume, Büsche oder eine zusammenhängende Bewaldung schließen.

Diese beschriebene 3D-konforme Symbolik ist von der Darstellung der 2D-Flugsymbolik einschließlich einer speziellen Landesymbolik überlagert, mit der dem Piloten weitere nützliche Informationen als numerischer Wert oder zeichnerisches Symbol zur Verfügung gestellt werden. Zum Beispiel kann Fig. 8 die aktuelle Geschwindigkeit über Grund ("34 G" dargestellt Mitte links) sowie die Höhe über Grund ("249" dargestellt Mitte rechts) entnommen werden. Element 7 bezeichnet den Flugpfadvektor, der den vorausberechneten Landepunkt beim derzeitigen Flugstatus kennzeichnet und die Winkel 9 symbolisieren die Richtung zum vorgesehenen Landepunkt hin.

Die vorliegende Erfindung ist für alle Arten von Fluggeräten, insbesondere für Helikopter geeignet.

## Patentansprüche

1. Mensch-Maschinen-Interface für den Piloten eines Fluggeräts zur Erzeugung einer der Außensicht des Piloten konformen 3D-Symbolik, wobei diese 3D-konforme Symbolik zur Darstellung des Geländes
a) ein Gitternetz des Geländes sowie
b) Konturlinien des Geländes umfasst, derart eingerichtet, dass abhängig vom Flugzustand des Fluggeräts die Darstellung von Gitternetz und Konturlinien unabhängig voneinander aktiviert oder deaktiviert werden kann,
wobei das Gitternetz nur jenseits einer definierten Mindestentfernung des darzustellenden Geländes angezeigt wird, wobei die Mindestentfernung von den Sichtverhältnissen abhängig ist, und
beim Reiseflug sowohl Gitternetz als auch Konturlinien aktiviert werden, und wobei die Aktivierung und Deaktivierung des Gitternetzes und der Konturlinien vollständig automatisch ablaufen kann, indem das Mensch-Maschinen-Interface auf interne, im Fluggerät vorhandene Daten zurückgreift.

2. Mensch-Maschinen-Interface nach Anspruch 1, **dadurch gekennzeichnet, dass** eine Deaktivierung des Gitternetzes oberhalb einer definierten Mindesthöhe erfolgt.

3. Mensch-Maschinen-Interface nach einem der vorangehenden Ansprüche, **dadurch gekennzeichnet, dass** bei Start und Landeanflug die Konturlinien deaktiviert und das Gitternetz aktiviert werden.

4. Mensch-Maschinen-Interface nach einem der vorangehenden Ansprüche,
**dadurch gekennzeichnet, dass** Konturlinien nur jenseits der definierten Mindestentfernung des darzustellenden Geländes angezeigt werden.

5. Mensch-Maschinen-Interface nach einem der vorangehenden Ansprüche, **dadurch gekennzeichnet, dass** die Größe einer Zelle des Gitternetzes in Abhängigkeit vom Flugzustand des Fluggeräts variiert wird.

6. Mensch-Maschinen-Interface nach einem der vorangehenden Ansprüche, **dadurch gekennzeichnet, dass** die Intensität, mit der Gitternetz und/oder Konturlinien dargestellt werden, in Abhängigkeit von der Entfernung des darzustellenden Geländes variiert werden.

7. Mensch-Maschinen-Interface nach einem der vorangehenden Ansprüche, **dadurch gekennzeichnet, dass** die Kreuzungspunkte des Gitternetzes gegenüber den übrigen Bestandteilen des Gitternetzes graphisch hervorgehoben werden.

8. Mensch-Maschinen-Interface nach einem der vorangehenden Ansprüche, **dadurch gekennzeichnet, dass** die 3D-konforme Symbolik Echtzeit-Daten eines an Bord des Fluggeräts befindlichen 3D-Sensors umfassen.

9. Mensch-Maschinen-Interface nach Anspruch 8, **dadurch gekennzeichnet, dass** die
Echtzeit-Daten des 3D-Sensors texturiert dargestellt werden können.

## Claims

1. Human-machine interface for the pilot of an aircraft for generating 3D imagery that conforms to the pilot's external view, wherein this conforming 3D imagery for representing the terrain comprises
a) a grid of the terrain and
b) contour lines of the terrain, designed such that, depending on the flight status of the aircraft, the representation of the grid and contour lines can be activated or deactivated independently of one another, wherein
the grid is only displayed beyond a defined minimum distance from the terrain to be represented, wherein the minimum distance is dependent on the visibility conditions, and
both the grid and the contour lines are activated during cruising, and wherein the grid and the contour lines can be activated and deactivated completely automatically by the human-machine interface using internal data available in the aircraft.

2. Human-machine interface according to claim 1, **characterized in that** the grid is deactivated above a defined minimum height.

3. Human-machine interface according to either of the preceding claims, **characterized in that** the contour lines are deactivated and the grid is activated during take-off and landing.

4. Human-machine interface according to any of the preceding claims, **characterized in that** contour lines are only displayed beyond the defined minimum distance from the terrain to be represented.

5. Human-machine interface according to any of the preceding claims, **characterized in that** the size of a cell in the grid is varied depending on the flight status of the aircraft.

6. Human-machine interface according to any of the preceding claims, **characterized in that** the intensity with which the grid and/or contour lines are represented is varied depending on the distance from the terrain to be represented.

7. Human-machine interface according to any of the preceding claims, **characterized in that** the crossing points of the grid are graphically highlighted by comparison with the other components of the grid.

8. Human-machine interface according to any of the preceding claims, **characterized in that** the conforming 3D imagery comprises real-time data from a 3D sensor located on board the aircraft.

9. Human-machine interface according to claim 8, **characterized in that** the real-time data from the 3D sensor can be represented in textured form.

## Revendications

1. Interface homme-machine pour le pilote d'un aéronef permettant de générer une symbolique 3D conforme à la vue extérieure du pilote, ladite symbolique conforme à la 3D permettant de représenter le terrain comprenant
a) un quadrillage du terrain et
b) des lignes de contour du terrain, configurée de telle manière que, selon l'état de vol de l'aéronef, les représentations du quadrillage et des lignes de contour peuvent être activées ou désactivées indépendamment l'une de l'autre,
le quadrillage n'étant affiché qu'au-delà d'une distance minimale définie du terrain à afficher, la distance minimale dépendant de la visibilité, et
le quadrillage et les lignes de contour pouvant être activés pendant le vol de croisière, et l'activation et la désactivation du quadrillage et des lignes de contour pouvant être effectuées de manière entièrement automatique par l'interface homme-machine en utilisant des données internes disponibles dans l'aéronef.

2. Interface homme-machine selon la revendication 1, **caractérisée en ce qu'**une désactivation du quadrillage survient au-dessus d'une altitude minimale définie.

3. Interface homme-machine selon l'une des revendications précédentes, **caractérisée en ce que**, lors du décollage et de l'atterrissage, les lignes de contour sont désactivées et le quadrillage est activé.

4. Interface homme-machine selon l'une des revendications précédentes, **caractérisée en ce que** les lignes de contour ne sont affichées qu'au-delà de la distance minimale définie du terrain à afficher.

5. Interface homme-machine selon l'une des revendications précédentes, **caractérisée en ce que** la taille d'une cellule du quadrillage est modifiée en fonction de l'état de vol de l'aéronef.

6. Interface homme-machine selon l'une des revendications précédentes, **caractérisée en ce que** l'intensité d'affichage du quadrillage et/ou des lignes de contour est modifiée en fonction de la distance au terrain à afficher.

7. Interface homme-machine selon l'une des revendications précédentes, **caractérisée en ce que** les points de croisement du quadrillage sont mis en évidence graphiquement par rapport aux autres composants du quadrillage.

8. Interface homme-machine selon l'une des revendications précédentes, **caractérisée en ce que** la symbolique conforme à la 3D comprend des données en temps réel provenant d'un capteur 3D situé à bord de l'aéronef.

9. Interface homme-machine selon la revendication 8, **caractérisée en ce que** les données en temps réel du capteur 3D peuvent être affichées sous une forme texturée.
